# FASCICULE DE BREVET EUROPEEN

(11) **EP 2 534 359 B1**
(45) Date de publication et mention de la délivrance du brevet: **12.04.2017**
(21) Numéro de dépôt: 11707451.8
(22) Date de dépôt: 03.02.2011
(51) Int. Cl.: F02K 1/15, F02K 1/76

(54) **SYSTÈME DE COMMANDE D'UN AÉRONEF**
STEUERSYSTEM FÜR EIN FLUGZEUG
AIRCRAFT CONTROL SYSTEM

(30) Priorité: 10.02.2010 FR 1000550
(43) Date de publication de la demande: 19.12.2012
(73) Titulaire: Safran Nacelles, 76700 Gonfreville-l'Orcher (FR)
(72) Inventeur: MAALIOUNE, Hakim, F-78630 Orgeval (FR)
(74) Mandataire: Gaillarde, Frédéric F. Ch.
(86) Numéro de dépôt international: PCT/FR2011/050211
(87) Numéro de publication internationale: WO 2011/098711

(56) Documents cités:
- EP-A1- 1 413 736
- WO-A1-03/010430
- WO-A1-2006/134253
- FR-A1- 2 920 203

## Description

La présente invention concerne un système de commande d'un aéronef et s'applique en particulier à la commande des dispositifs électriques de la nacelle du type inverseur de poussée.

Un aéronef est propulsé par plusieurs turboréacteurs logés chacun dans une nacelle abritant également un ensemble de dispositifs complémentaires liés à son fonctionnement, tel qu'un dispositif d'inversion de poussée ou un système de dégivrage, par exemple.

Le rôle d'un dispositif d'inversion de poussée lors d'un atterissage de l'aéronef est d'améliorer sa capacité de freinage en redirigeant vers l'avant au moins une partie de la poussée générée par le turboréacteur.

Dans cette phase, le dispositif d'inversion de poussée obstrue la tuyère d'éjection des gaz et dirige le flux d'éjection du moteur vers l'avant de la nacelle générant de ce fait une contre poussée qui vient s'ajouter au freinage des roues de l'avion.

Les moyens mis en oeuvre pour réaliser cette réorientation de flux varient suivant le type d'inverseur. Cependant, dans tous les cas, la structure du dispositif d'inversion de poussée comprend des capots mobiles déplaçables entre une position ouverte dans laquelle ils ouvrent dans la nacelle un passage destiné aux flux deviés et une position de fermeture dans laquelle il ferment ce passage. Ces capots mobiles peuvent remplir eux-mêmes la fonction de déviation ou plus simplement une fonction d'activation d'autres moyens de déviation tels que les volets d'obturation de la veine.

Un autre équipement électrique important d'une nacelle de turboréacteur est le système de dégivrage pour la lèvre d'entrée d'air du turboréacteur de l'aéronef qui recourt à un système électrique utilisant un réseau de résistances électriques chauffantes à travers lesquelles circule un courant électrique.

Un aspect important de ces nacelles utilisant des systèmes électriques est la gestion du contrôle et de la commande de ces différents dispositifs de la nacelle.

Pour le dispositif d'inversion de poussée, le système de commande des éléments déplaçables est actuellement composé d'au moins un ensemble d'organes de manoeuvre électromécaniques pour manoeuvrer les éléments déplaçables entre leurs positions de fermeture et d'ouverture de l'inverseur de poussée pilotés par au moins un boitier électronique de commande de type ETRAS (acronyme de Electrical Thrust Reverser Actuation Controller en terminologie anglo-saxonne) relié électriquement à une unité de contrôle moteur de type FADEC (acronyme de Full Authority Digital Engine Control en terminologie anglo-saxonne) destinée à contrôler et surveiller le turboréacteur correspondant.

Ce boîtier électronique de commande est un calculateur dédié à la nacelle ou une partie de cette dernière (élément déplaçable ou organe de manoeuvre spécifique, par exemple), destiné notamment à traduire les ordres d'ouverture ou de fermeture de l'inverseur de poussée délivrés par le FADEC en des séquences de commande des éléments déplaçables et des organes de manoeuvre électromécaniques correspondants et d'autre part à informer le FADEC de l'état des organes de manoeuvre et de la position des éléments déplaçables.

Le document WO2006/134253 divulgue un système de commande d'un aéronef propulsé par au moins un turboréacteur logé dans une nacelle, comprenant :
- une unité de régulation électronique à pleine autorité (FADEC) du turboréacteur contrôlant le turboréacteur, et
- un boîtier électronique de commande comprenant d'une part un module électronique destiné au pilotage de vérins électriques et d'autre part un module de puissance destiné à fournir aux moteurs électriques l'énergie nécessaire à leur fonctionnement.

Bien que permettant une gestion autonome de la nacelle, ce système de commande de l'aéronef présente des inconvénients.

Les calculateurs embarqués évoluant vers de plus en plus de fonctionnalités liés à l'évolution des dispositifs de l'aéronef et notamment ceux liés à la nacelle, les interconnexions entre ces calculateurs embarqués, le cockpit de l'aéronef et le FADEC se multiplient.

L'abondance de calculateurs de plus en plus performants devient préjudiciable pour le réseau de communication entre ces différents calculateurs, ainsi que pour le circuit d'alimentation électrique nécessaire à leur bon fonctionnement, les rendant plus complexes.

De nombreuses contraintes de dimensionnement du système en volume et masse sont alors imposées par ce système de commande.

En effet, les interfaces mécaniques ou de communication ainsi que les cablages et harnais nécessaires se multiplient affectant la masse et le volume du système de commande.

De plus, la complexité de ce système de commande multiplie les risques de panne, et les coûts de maintenance associés sont alors accentués.

Un but de la présente invention est de pallier les problèmes définis ci-dessus.

Il existe un besoin pour une architecture de commande d'un aéronef simplifiée et fiable dont les coûts et la masse sont limités.

A cet effet, l'invention propose un système de commande d'un aéronef propulsé par au moins un turboréacteur logé dans une nacelle, le système comprenant :
- une unité de régulation électronique à pleine autorité du turboréacteur contrôlant le turboréacteur et contrôlant et commandant directement au moins un dispositif électrique de la nacelle et,
- une unité de puissance électrique de la nacelle, externe à ladite unité de régulation électronique à pleine autorité du turboréacteur de contrôle du turboréacteur, l'unité gérant l'alimentation électrique dudit dispositif électrique de la nacelle.

Selon des modes particuliers de réalisation, le système peut comprendre l'une ou plusieurs des caractéristiques suivantes, prises isolément ou selon toutes les combinaisons techniquement possibles :
- le dispositif électrique de puissance de la nacelle est un dispositif d'inversion de poussée, un dispositif de dégivrage ou un dispositif de tuyère variable ;
- l'unité de régulation électronique à pleine autorité du turboréacteur est apte à assurer le pilotage d'éléments déplaçables du dispositif d'inversion de poussée et d'organes de manoeuvre électromécaniques destinés à manoeuvrer lesdits éléments déplaçables ;
- l'unité de régulation électronique à pleine autorité du turboréacteur est apte à assurer le pilotage de séquences de commande d'actionneurs des éléments déplaçables du dispositif d'inversion de poussée ;
- l'unité de régulation électronique à pleine autorité du turboréacteur est apte à assurer le pilotage de capteurs de position, de capteurs de proximité et/ou de détecteurs d'état des éléments déplaçables et/ou organes de manoeuvre électromécaniques ;
- l'unité de régulation électronique à pleine autorité du turboréacteur est apte à assurer le pilotage d'un verrou secondaire d'un élément déplaçable du dispositif d'inversion de poussée ;
- l'unité de régulation électronique à pleine autorité du turboréacteur et l'unité de puissance électrique de la nacelle sont reliées par un bus d'alimentation électrique ;
- l'unité de puissance électrique de la nacelle comprend des moyens de redressement et de filtrage de courant électrique issu d'un réseau électrique ;
- l'unité de puissance électrique de la nacelle est apte à piloter les séquences de commande de verrou primaire et/ou de frein du dispositif d'inversion de poussée.

L'invention concerne également un aéronef propulsé par au moins un turboréacteur logé dans une nacelle comprenant un système de commande tel que décrit précédemment.

D'autres aspects, buts et avantages de l'invention apparaîtront à la lecture de la description détaillée suivante de formes de réalisation préférées de celle-ci, donnée à titre d'exemple non limitatif et faite en référence aux dessins annexés sur lesquels :
- la figure 1 représente un schéma fonctionnel d'un système de commande d'un aéronef selon un mode de réalisation de la présente invention ;
- la figure 2 représente un schéma fonctionnel d'une unité de puissance comprise dans le système de commande d'un aéronef de la figure 1.

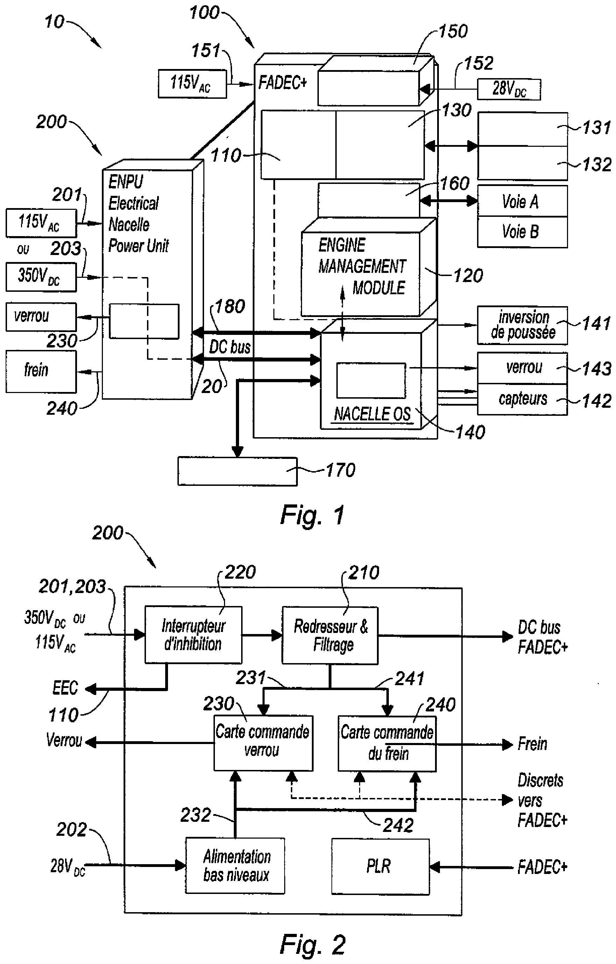

La figure 1 présente un mode de réalisation d'une architecture de commande 10 d'un aéronef qui permet de répartir les fonctions traditionnellement mises en oeuvre dans des boîtiers de commande dédiés à la nacelle vers deux systèmes, les deux systèmes étant les suivants : une unité 100 de régulation électronique numérique à pleine autorité du ou des turboréacteurs de l'aéronef, dénommée FADEC par la suite, localisée dans le turboréacteur, dans laquelle un lien direct est établi entre les commandes de la nacelle et l'unité 100 et une unité 200 dite de puissance électrique, externe au FADEC.

Tel qu'illustré sur la figure 1, le système de commande 10 de l'aéronef comprend, de façon connue en soi, le FADEC 100 qui a pour fonction de contrôler et de surveiller l'ensemble des fonctions liées aux turboréacteurs de l'aéronef.

Le FADEC 100 comprend ainsi un contrôleur électronique de moteur 110, aussi appelé EEC (acronyme de Electronic Engine Control en terminologie anglo-saxonne) qui contrôle et surveille l'ensemble des fonctions liées aux turboréacteurs de l'aéronef, ensemble ici regroupé dans un module 120 dénommé Engine Management Module en terminologie anglo-saxonne, un second calculateur (non illustré) chargé de superviser les fonctions critiques en cas de défaillance du contrôleur et de fournir les informations nécessaires à la maintenance et leurs logiciels.

Il est à noter que les fonctions du contrôleur électronique de moteur 110 peuvent être implémentées dans un ou plusieurs calculateurs.

Il comprend également un module 130 gérant l'ensemble des entrées/sorties en courant/tension dont le FADEC a besoin pour les fonctions de contrôle et de commande des turboréacteurs, comme, par exemple, pour les commandes d'un ou plusieurs actionneurs 131 et 132 des turboréacteurs.

Ce module 130 comprend notamment des connecteurs, une interface avec les actionneurs du turboréacteur et une interface avec les capteurs liés au turboréacteur.

Il comprend également un module 160 de gestion des paramètres de l'aéronef destiné à acquérir l'ensemble des paramètres de l'aéronef reçus, de façon connue en soi, par un concentrateur de données via deux voies A et B.

On peut citer, comme exemples non limitatifs de fonctions pilotées par le FADEC 100, les fonctions suivantes, à savoir l'allumage, le démarrage et l'arrêt du turboréacteur, le contrôle de poussée et la détection des dysfonctionnements, le contrôle des entrées/sorties du FADEC, le contrôle des inverseurs de poussée et de l'antidégivrage de la nacelle.

Selon l'invention, le FADEC 100 est également adapté pour commander directement au moins un dispositif électrique d'une nacelle de l'aéronef.

Par dispositif électrique, on entend tout dispositif de la nacelle que ce soit un dispositif électrique de puissance ou une simple unité de surveillance associé à la nacelle du moteur.

On peut citer, comme exemples non limitatifs, un dispositif d'inversion de poussée, un dispositif de dégivrage/antidégivrage ou encore un dispositif de tuyère variable.

Par directement, on entend sans passer par un ou plusieurs calculateurs de commande intermédiaires autres que l'EEC 110 du FADEC 100, ce calculateur intermédiaire pouvant être externe ou non au FADEC 100.

L'ensemble des commandes de la nacelle est ainsi effectué directement, en interne, au sein du FADEC 100 par un calculateur non dédié.

Les ressources de l'EEC 110 du FADEC 100 sont les seules utilisées pour contrôler et commander les différentes fonctions des dispositifs électriques de la nacelle, regroupées dans un module 140 de contrôle et de commande de la nacelle du FADEC, dénommé Nacelle operating software en terminologie anglo-saxonne, comprenant également les logiciels de la nacelle.

Ces ressources sont mutualisées entre les fonctions connues de contrôle et de commande des turboréacteurs et les fonctions de contrôle et commande des dispositifs électriques de la nacelle.

Le FADEC 100 a ainsi pleine autorité sur le pilotage de la nacelle et les paramètres de fonctionnement de cette dernière.

Le FADEC 100 se dote de nouvelles fonctions dédiées au pilotage des équipements électriques de la nacelle et, notamment, du système de dégivrage, des capots de reverse, du dispositif d'inversion de poussée ou du système de variation de section de tuyère.

Plus précisément, concernant le dispositif d'inversion de poussée, un mode de réalisation de ce dernier prévoit qu'il comprend au moins un élément déplaçable entre une position de fermeture et une position d'ouverture coopérant en position d'ouverture à la production de l'inversion de poussée et au moins un ensemble d'organes de manoeuvre électromécaniques pour manoeuvrer l'élément déplaçable entre les positions de fermeture et d'ouverture.

L'élément déplaçable peut être, dans des exemples non limitatifs, un capot de nacelle, des portes et/ou des volets d'inversion en amont ou en aval du capot de la nacelle.

L'ensemble d'organes de manoeuvre électromécaniques comporte essentiellement des actionneurs électriques destinés à actionner les éléments déplaçables, au moins un verrou électrique, appelé verrou primaire, de retenue de chaque élément déplaçable et des détecteurs d'état et capteurs des organes de manoeuvre et des éléments déplaçables du dispositif d'inversion de poussée.

Les capteurs peuvent comprendre des capteurs de position et/ou de proximité.

Le dispositif d'inversion de poussée peut comprendre également des verrous électriques secondaire et tertiaire et un frein.

De façon connue, ce frein est destiné à freiner le dispositif d'inversion de poussée en cas de survitesse due à des défaillances du dispositif. Il permet d'éviter tout endommagement du dispositif.

Chaque ensemble d'organes de manoeuvre associé à un élément déplaçable est connecté directement au FADEC 100, via des lignes de commande, et plus précisément, au module 140 de contrôle et de commande du FADEC 100 regroupant l'ensemble des fonctions dédiées à la nacelle.

Ainsi, outre les instructions d'ordre d'ouverture et de fermeture du dispositif d'inversion de poussée et autres ordres le concernant, le FADEC 100 est apte à délivrer, directement en sortie du FADEC 100, des instructions de commande, via les lignes de commande, correspondant à ces ordres pour assurer le pilotage des fonctions suivantes:
- commande 141 de l'ouverture /fermeture de l'inverseur de poussée se traduisant par le pilotage des séquences de commande des actionneurs des éléments déplaçables ;
- commande 142 des capteurs de position des volets et actionneurs auquel il est relié directement via une ligne de commande et des détecteurs d'état permettant de contrôler la position ouverte ou fermée des portes et volets. Les signaux correspondants aux états des portes et volets sont récupérés directement par le FADEC 100 qui pilote les moteurs associés à la nacelle en conséquence selon une stratégie de commande, par exemple commande ou non de la coupure d'alimentation des actionneurs ;
- commande des capteurs de proximité détectant l'état verrouillé ou déverrouillé des verrous. Les signaux correspondants aux états des verrous sont reçus directement par le FADEC 100 ;
- commande 143 des verrous secondaires des éléments déplaçables. Il traduit les commandes d'ouverture ou de fermeture des éléments déplaçables en séquence de commande des verrous secondaires.

Le FADEC 100 pilote également les fonctions suivantes :
- commande de l'ouverture /fermeture des capots se traduisant par le pilotage des séquences de commande des actionneurs des capots ;
- commande de la variation de section de tuyère se traduisant par le pilotage des séquences de commande des actionneurs de la tuyère ;
- pilotage de la synchronisation des déplacements des capots et des volets suivant une loi de commande particulière ;
- commande des dispositifs de surveillance de la nacelle ;
- contrôle et commande des onduleurs des moteurs de la nacelle qui régulent les courants de phase à un ou plusieurs moteurs ;
- traduction des ordres de dégivrage/anti-dégivrage en séquence de commande des circuits électriques de dégivrage ou d'anti-dégivrage de la nacelle.

Une partie de ces informations peut ensuite être transmise directement via une interface appropriée au cockpit de l'aéronef.

Par ailleurs, le module de contrôle et de commande 140 de la nacelle est relié à un module de maintenance 170.

Ce module de maintenance 170 comprend une interface permettant d'une part, de récupérer des données stockées en interne du module de contrôle et de commande 140 via une mémoire et, d'autre part, de permettre de mettre à jour les logiciels de la nacelle compris dans ledit module 140.

Concernant le verrou tertiaire, prévu pour reprendre le chargement des éléments déplaçables en cas de défaillance des verrous primaire et secondaire, ce dernier peut être commandé directement à partir du cockpit de l'aéronef ou à partir du FADEC 100.

Déplacer les fonctions de commande liées à la nacelle et notamment les fonctions liées à l'inversion de poussée vers le FADEC 100 et mutualiser le commandement des capots et volets d'inversion de poussée dans le FADEC 100 engendre une simplification de l'architecture électrique de l'ensemble propulsif complet dans la mesure où l'on réduit le nombre de calculateurs liés à l'ensemble propulsif complet.

Par voie de conséquence, on réduit le nombre de harnais de puissance, de commande et de contrôle et le nombre d'interfaces électriques et mécaniques.

Les câblages et connecteurs sont également significativement réduits et les doublons de fond de paniers sont supprimés.

Les ordres étant traités en interne du FADEC 100, on s'affranchit des échanges de données entre les calculateurs dédiés à la nacelle de l'art antérieur et le FADEC de l'art antérieur, et on supprime ainsi des protocoles et interfaces de communication.

Les temps de calcul et de réponse sont également réduits.

L'architecture électrique de l'ensemble propulsif étant optimisée, la masse et le volume du système propulsif sont diminués.

La mise en oeuvre du FADEC 100 décrit précédemment permet également de réduire les coûts d'exploitation et de maintenance.

Par ailleurs, le circuit d'alimentation électrique de l'aéronef comprend une unité 150 d'alimentation électrique interne au FADEC reliée à au moins une entrée d'alimentation électrique.

Cette unité 150 alimente ainsi les équipements électriques des turboréacteurs tels que les capteurs et les actionneurs notamment.

Dans un mode de réalisation de la présente invention, le circuit d'alimentation électrique prévoit plusieurs entrées d'alimentation électrique vers l'unité 150 d'alimentation électrique : une 151 pour une tension alternative issue du réseau avion, typiquement de 115 volts et une autre 152 de basse tension, par exemple de 28 volts de tension continue.

Selon l'invention, l'alimentation des équipements électriques situés dans l'environnement du turboréacteur et, plus particulièrement, des dispositifs électriques de la nacelle est gérée par l'unité 200 dite de puissance électrique de la nacelle, dénommée ENPU (acronyme de Electrical Nacelle Power Unit en termes anglo-saxons), illustrée plus en détails sur la figure 2.

Cette unité 200, externe au FADEC 100, est reliée à ce dernier via au moins un bus 20 de distribution de tension électrique.

C'est une unité 200 qui ne comprend aucun logiciel et qui est destinée principalement à gérer l'alimentation électrique des dispositifs de la nacelle, et notamment des organes de manoeuvre des éléments déplaçables de l'inverseur de poussée, via l'alimentation électrique du module 140 de contrôle et de commande de la nacelle du FACEC 100.

Plus particulièrement, l'ENPU 200 permet d'isoler les fonctions liées à l'interface du réseau électrique.

Cette unité 200 est reliée au module de contrôle et de commande 140 du FADEC, via des indicateurs 180 (ou health status discretes en termes anglo-saxons) prenant la forme de variables indiquant l'état de santé de l'ENPU 200.

Ces indicateurs 180 offrent l'avantage de supprimer un bus numérique complexe et lourd à gérer entre l'ENPU 200 et le FADEC 100.

Par ailleurs, l'ENPU 200 est reliée à différentes entrées d'alimentation électrique.

Ainsi, l'ENPU 200 comprend une ou plusieurs entrées reliées via une ligne au réseau électrique de l'aéronef.

L'ENPU peut ainsi recevoir une tension 201 d'entrée alternative typiquement de 115 volts provenant du réseau ou une tension 202 basse continue de 28 volts.

Il peut également recevoir une tension 203 continue directement du cockpit, typiquement de 350 Volts.

Dans le cas où le réseau électrique de l'aéronef est à courant alternatif, l'ENPU 200 assure le redressement 210 et le filtrage de ce courant pour délivrer une tension électrique continue au FADEC 100, via le bus 20 distribution de tension.

L'ENPU 200 transforme et adapte ainsi le signal électrique provenant du réseau avion pour fournir une tension continue régulée (on passe de 115 volts à environ une tension continue de 270 volts), afin d'alimenter les moteurs électriques des organes de manoeuvre des dispositifs électriques de la nacelle.

Par ailleurs, l'ENPU 200 comprend un interrupteur 220 d'inhibition destiné à couper l'alimentation électrique de l'unité en cas de maintenance de l'EEC 110 du FADEC 100.

Par ailleurs, l'ENPU 200 assure la commande 230, 240 respective des verrous primaires et/ou du frein des éléments déplaçables de l'inverseur de poussée de la nacelle, ceci afin d'assurer la ségrégation des lignes de défense.

Les verrous et frein étant à commande électrique, ils sont alimentés via l'ENPU 200 par une tension alternative redressée et filtrée ou une tension continue via des lignes d'alimentation respectives 231,241 et 232, 242 telles que décrites précédemment.

Par ailleurs, l'ENPU 200 assure également la commande d'une résistance de décharge ou PLR des moteurs de la nacelle, nécessaire lorsque ces derniers sont en phase générateur.

Bien évidemment, l'invention ne se limite pas aux seules formes de réalisation du dispositif d'inversion de poussée décrites ci-dessus à titre d'exemples, mais elle embrasse au contraire toutes les variantes possibles.

## Revendications

1. Système de commande (10) d'un aéronef propulsé par au moins un turboréacteur logé dans une nacelle, le système comprenant :
- une unité (100) de régulation électronique à pleine autorité du turboréacteur contrôlant le turboréacteur et contrôlant et commandant directement au moins un dispositif électrique de la nacelle et,
- une unité (200) de puissance électrique de la nacelle, externe à ladite unité de régulation électronique à pleine autorité du turboréacteur de contrôle du turboréacteur, l'unité (200) gérant l'alimentation électrique dudit dispositif électrique de la nacelle.

2. Système de commande selon la revendication 1, **caractérisé en ce que** le dispositif électrique de puissance de la nacelle est un dispositif d'inversion de poussée, un dispositif de dégivrage ou un dispositif de tuyère variable.

3. Système de commande selon la revendication 2, **caractérisé en ce que** l'unité (100) de régulation électronique à pleine autorité du turboréacteur est apte à assurer le pilotage d'éléments déplaçables du dispositif d'inversion de poussée et d'organes de manoeuvre électromécaniques destinés à manoeuvrer lesdits éléments déplaçables.

4. Système de commande selon la revendication 3, **caractérisé en ce que** l'unité (100) de régulation électronique à pleine autorité du turboréacteur est apte à assurer le pilotage de séquences de commande d'actionneurs des éléments déplaçables du dispositif d'inversion de poussée.

5. Système de commande selon la revendication 3, **caractérisé en ce que** l'unité (100) de régulation électronique à pleine autorité du turboréacteur est apte à assurer le pilotage de capteurs de position, de capteurs de proximité et /ou de détecteurs d'état des éléments déplaçables et/ou organes de manoeuvre électromécaniques.

6. Système de commande selon la revendication 3, **caractérisé en ce que** l'unité (100) de régulation électronique à pleine autorité du turboréacteur est apte à assurer le pilotage d'un verrou secondaire d'un élément déplaçable du dispositif d'inversion de poussée.

7. Système de commande selon la revendication 1, **caractérisé en ce que** l'unité (100) de régulation électronique à pleine autorité du turboréacteur et l'unité (200) de puissance électrique de la nacelle sont reliés par un bus d'alimentation électrique.

8. Système de commande selon la revendication 1, **caractérisé en ce que** l'unité (200) de puissance électrique de la nacelle comprend des moyens de redressement et de filtrage de courant électrique issu d'un réseau électrique.

9. Système de commande selon la revendication 2, **caractérisé en ce que** l'unité (200) de puissance électrique de la nacelle est apte à piloter les séquences de commande de verrou primaire et/ou de frein du dispositif d'inversion de poussée.

10. Aéronef propulsé par au moins un turboréacteur logé dans une nacelle, comprenant un système de commande (10) selon l'une des revendications 1 à 9 précédentes.

## Patentansprüche

1. Steuersystem (10) für ein Flugzeug, das durch zumindest ein Turbotriebwerk angetrieben wird, das in einer Gondel untergebracht ist, wobei das System Folgendes umfasst:
- eine elektronische Regelungseinheit (100) mit voller Autorität über das Turbotriebwerk, die das Turbotriebwerk kontrolliert und zumindest eine elektrische Vorrichtung der Gondel direkt kontrolliert und steuert, und
- ein elektrisches Leistungsteil (200) für die Gondel, extern zur besagten elektronische Regelungseinheit mit voller Autorität über das Turbotriebwerk zur Kontrolle des Turbotriebwerks, wobei die Einheit (200) die Stromversorgung der besagten elektrischen Vorrichtung der Gondel verwaltet.

2. Steuersystem nach Anspruch 1, **dadurch gekennzeichnet, dass** die elektrische Leistungsvorrichtung der Gondel eine Schubumkehrvorrichtung, eine Enteisungsvorrichtung oder eine Vorrichtung mit variabler Düse ist.

3. Steuersystem nach Anspruch 2, **dadurch gekennzeichnet, dass** die elektronische Regelungseinheit (100) mit voller Autorität über das Turbotriebwerk imstande ist, für die Steuerung von verfahrbaren Elementen der Schubumkehrvorrichtung und von elektromechanischen Bedienteilen zu sorgen, die dazu bestimmt sind, die besagten verfahrbaren Elemente zu bedienen.

4. Steuersystem nach Anspruch 3, **dadurch gekennzeichnet, dass** die elektronische Regelungseinheit (100) mit voller Autorität über das Turbotriebwerk imstande ist, für die Steuerung von Steuersequenzen von Stellgliedern der verfahrbaren Elemente der Schubumkehrvorrichtung zu sorgen.

5. Steuersystem nach Anspruch 3, **dadurch gekennzeichnet, dass** die elektronische Regelungseinheit (100) mit voller Autorität über das Turbotriebwerk imstande ist, für die Steuerung von Positionsschaltern, von Näherungsschaltern und/oder Statusdetektoren der verfahrbaren Elemente und/oder elektromechanischen Bedienteile zu sorgen.

6. Steuersystem nach Anspruch 3, **dadurch gekennzeichnet, dass** die elektronische Regelungseinheit (100) mit voller Autorität über das Turbotriebwerk imstande ist, für die Steuerung eines Sekundärriegels eines verfahrbaren Elements der Schubumkehrvorrichtung zu sorgen.

7. Steuersystem nach Anspruch 1, **dadurch gekennzeichnet, dass** die elektronische Regelungseinheit (100) mit voller Autorität über das Turbotriebwerk und das elektrische Leistungsteil (200) für die Gondel durch einen elektrischen Versorgungsbus miteinander verbunden sind.

8. Steuersystem nach Anspruch 1, **dadurch gekennzeichnet, dass** das elektrische Leistungsteil (200) für die Gondel Mittel zum Gleichrichten und Filtern von elektrischem Strom aus einem Stromnetz umfasst.

9. Steuersystem nach Anspruch 2, **dadurch gekennzeichnet, dass** das elektrische Leistungsteil (200) für die Gondel imstande ist, die Steuersequenzen eines Primärriegels und/oder einer Bremse der Schubumkehrvorrichtung zu steuern.

10. Flugzeug, das durch zumindest ein Turbotriebwerk angetrieben wird, das in einer Gondel untergebracht ist, ein Steuersystem (10) nach einem der vorhergehenden Ansprüche 1 bis 9 umfassend.

## Claims

1. A control system (10) of an aircraft propelled by at least one turbojet engine housed in a nacelle, the system comprising:
- a full-authority electronic regulation unit (100) of the turbojet engine monitoring the turbojet engine and monitoring and controlling directly at least one electrical device of the nacelle, and
- an electric power unit (200) of the nacelle, external to said full-authority electronic regulation unit of the turbojet engine for monitoring the turbojet engine, the unit (200) managing the power supply of said electrical device of the nacelle.

2. The control system according to claim 1, **characterized in that** the electrical power device of the nacelle is a thrust reverser device, a de-icing device or a variable nozzle device.

3. The control system according to claim 2, **characterized in that** the full-authority electronic regulation unit (100) of the turbojet engine is capable of ensuring the driving of displaceable elements of the thrust reverser device and of electromechanical operating members intended to operate said displaceable elements.

4. The control system according to claim 3, **characterized in that** the full-authority electronic regulation unit (100) of the turbojet engine is capable of ensuring the driving of control sequences of actuators of the displaceable elements of the thrust reverser device.

5. The control system according to claim 3, **characterized in that** the full-authority electronic regulation unit (100) of the turbojet engine is capable of ensuring the driving of position sensors, proximity sensors and/or state detectors of the displaceable elements and/or of the electromechanical operating members.

6. The control system according to claim 3, **characterized in that** the full-authority electronic regulation unit (100) of the turbojet engine is capable of ensuring the driving of a secondary lock of a displaceable element of the thrust reverser device.

7. The control system according to claim 1, **characterized in that** the full-authority electronic regulation unit (100) of the turbojet engine and the electric power unit (200) of the nacelle are connected by an electric power bus.

8. The control system according to claim 1, **characterized in that** the electric power unit (200) of the nacelle comprises means for rectifying and filtering an electric current derived from an electrical network.

9. The control system according to claim 2, **characterized in that** the electric power unit (200) of the nacelle is capable of driving the control sequences of the primary lock and/or of the brake of the thrust reverser device.

10. An aircraft propelled by at least one turbojet engine housed in a nacelle, comprising a control system (10) according to any of the preceding claims 1 to 9.
